# EUROPÄISCHE PATENTSCHRIFT

(11) **EP 2 966 308 B1**
(45) Veröffentlichungstag und Bekanntmachung des Hinweises auf die Patenterteilung: **04.04.2018**
(21) Anmeldenummer: 15174334.1
(22) Anmeldetag: 29.06.2015
(51) Int. Cl.: F16C 17/04, F16C 33/10, F01D 25/16, F01D 25/18, F16C 17/10

(54) **AXIALLAGER**
AXIAL BEARING
PALIER AXIAL

(30) Priorität: 10.07.2014 DE 102014213473; 04.11.2014 DE 102014222514
(43) Veröffentlichungstag der Anmeldung: 13.01.2016
(73) Patentinhaber: Bosch Mahle Turbo Systems GmbH & Co. KG, 70376 Stuttgart (DE)
(72) Erfinder: GAUGER, Stephan, 73730 Esslingen (DE); HASLINGER, Fabian, 68163 Mannheim (DE)
(74) Vertreter: BRP Renaud & Partner mbB Rechtsanwälte Patentanwälte Steuerberater

(56) Entgegenhaltungen:
- DE-A1- 19 641 673
- DE-A1-102008 045 229
- JP-A- 2003 148 456
- JP-A- 2003 222 123

## Beschreibung

Die vorliegende Erfindung betrifft ein Axiallager oder ein kombiniertes Axial-/Radiallager, insbesondere für einen Abgasturbolader, das im Wesentlichen eine scheiben- oder zylinderförmige Gestalt aufweist, gemäß dem Oberbegriff des Anspruchs 1. Die Erfindung betrifft außerdem einen Abgasturbolader mit zumindest einem derartigen Axiallager oder einem solchen kombinierten Axial-/Radiallager.

Bedingt durch zukünftig strengere Abgasvorschriften werden zunehmend Maßnahmen gesucht, um den CO₂-Ausstoß von Verbrennungsmotoren reduzieren zu können. Eine gängige Maßnahme hierfür ist die Verbrauchsreduzierung durch Downspeeding/Downsizing kombiniert mit einer Abgasturboaufladung. Der Abgasturbolader hat dabei in der Regel ein hydrodynamisches Gleitlager, welches in ein Axial- und Radiallager aufgeteilt ist. Um den CO₂-Ausstoß von turboaufgeladenen Verbrennungsmotoren weiter reduzieren zu können, ist insbesondere eine optimierte Lagerung eines Rotors in einem Abgasturbolader hilfreich.

Aus der WO 2011/154078 A1 ist ein gattungsgemäßes Axiallager zur Lagerung einer rotierbaren Welle mit einem fest mit einem Lagergehäuse verbundenen ersten Lagerkörper und einem mit der Welle rotierenden zweiten Lagerkörper bekannt. Das Axiallager weist dabei in Umfangsrichtung angeordnet zumindest eine Öltasche, eine sich daran anschließende Keilfläche sowie eine sich wiederum daran anschließende Rast-/Lagerfläche auf. Über diese Keilfläche bzw. der Rast-/Lagerfläche erfolgt die eigentliche axiale Lagerung der drehbaren Welle mittels eines im Ölfilm erzeugten Drucks.

Um den CO₂-Ausstoß von turboaufgeladenen Verbrennungsmotoren auch langfristig reduzieren zu können, ist es insbesondere erforderlich, die Lagerfähigkeit des Axiallagers bzw. des kombinierten Axial-/Radiallagers möglichst über die gesamte Lebensdauer und damit verschleißunabhängig gewährleisten zu können. Durch nicht optimale Randbedingungen, beispielsweise Ölmangelschmierung, zu hohe Öltemperaturen bzw. zu hohe Schubbelastungen bei transienten Vorgängen, kann es zu einem Verschleiß des Axiallagers kommen, der unmittelbar zu einer signifikanten Abnahme der Tragfähigkeit und damit der Lagerfähigkeit des Axiallagers bzw. des kombinierten Axial-/Radiallagers führt. Die DE10 2008 045 229 A1 und JP 2003-222123 A offenbaren weitere gattungsgemäße Axiallager. Die vorliegende Erfindung beschäftigt sich daher mit dem Problem, für ein Axiallager oder ein kombiniertes Axial-/Radiallager der gattungsgemäßen Art eine verbesserte oder zumindest eine alternative Art bzw. eine verbesserte oder zumindest eine alternative Ausführungsform anzugeben, durch welche die Tragfähigkeit des Axiallagers bzw. des kombinierten Axial-/Radiallagers auch langfristig, vorzugsweise über die gesamte Lebensdauer gewährleistet werden kann.
Dieses Problem wird erfindungsgemäß durch den Gegenstand des unabhängigen Anspruchs 1 gelöst. Vorteilhafte Ausführungsformen sind Gegenstand der abhängigen Ansprüche.
Die vorliegende Erfindung beruht auf dem allgemeinen Gedanken, eine definierte Verschleißhöhe auf das Axiallager und hier konkret auf eine Rastfläche des Axiallagers aufzubringen und dadurch die Lebensdauer des Axiallagers zu steigern, bzw. dessen Tragfähigkeit langfristig gewährleisten zu können. Das hierfür verwendete Axiallager besitzt dabei in bekannter Weise eine scheiben- oder zylinderförmige Gestalt sowie eine zentrisch angeordnete Durchtrittsöffnung für eine Welle sowie eine kreissegmentartige Öltasche und eine sich daran in Umfangsrichtung kreissegmentartig anschließende Keilfläche. Generell kann dabei das Axiallager als reines Axiallager oder als kombiniertes Axial-/Radiallager ausgebildet sein. An die Keilfläche wiederum schließt sich eine Rastfläche an, wobei diese Rastfläche erfindungsgemäß eine zusätzliche Verschleißhöhe aufweist, die über die Lebensdauer des Axiallagers gesehen als Verschleißschicht dient und abgetragen werden kann. Bei nicht gedichteten Axiallagern würde eine derartig zusätzlich angeordnete Verschleißhöhe zu einer drastischen Verringerung der Tragfähigkeit führen, wodurch eine definierte zusätzliche Verschleißhöhe nicht wirklich zielführend wäre. Aus diesem Grund besitzt das erfindungsgemäße Axiallager oder das kombinierte Axial-/Radiallager zusätzlich einen ringsegmentförmig verlaufenden Innenbund, der als Dichtsteg ausgebildet ist und unterbrechungsfrei in die Rastfläche übergeht sowie einen zumindest ringsegmentförmig verlaufenden Außenbund, der ebenfalls als Dichtsteg ausgebildet ist. Der Innenbund und der Außenbund bewirken dabei die erforderliche Dichtwirkung wodurch die Tragfähigkeit auch mit der zusätzlichen Verschleißhöhe nicht beeinträchtigt wird. Insgesamt kann mit einem derart ausgebildeten Axiallager oder kombinierten Axial-/Radiallager mit definierter Verschleißhöhe sowie innerem und äußerem Dichtsteg die Lebensdauer deutlich gesteigert werden. Generell ermöglicht das Vorsehen der erfindungsgemäßen zusätzlichen Verschleißhöhe auch eine Verschlankung des Axiallagerbaukastens, da beispielsweise ein Grunddesign des Axiallagers ohne Verschleißhöhe für den maximal auftretenden Schub innerhalb einer Rumpfgruppe ausgelegt ist, wogegen der minimal auftretende Schub durch die zusätzlich definierte Verschleißhöhe abgedeckt ist. Das erfindungsgemäße Axiallager / Axial-/Radiallager passt sich somit durch Verschleiß der zusätzlichen Verschleißhöhe an die jeweiligen Schubanforderungen optimal an. Mit dem erfindungsgemäßen Axiallager sind somit vorzugsweise sämtliche auftretende Schubzustände abdeckbar, so dass im günstigsten Falle lediglich ein einziges Axiallager innerhalb einer Rumpfgruppe vorgehalten werden muss, wodurch sich insbesondere auch die Lager- und Logistikkosten aufgrund der Teileanzahl deutlich senken lassen.

Bei einer vorteilhaften Weiterbildung der erfindungsgemäßen Lösung weist die Keilfläche eine in Umfangsrichtung kontinuierliche oder diskontinuierliche Steigung auf. Durch eine kontinuierliche Steigung wird ein kontinuierlicher Druckaufbau ermöglicht, während durch eine diskontinuierliche Steigung beispielsweise zunächst ein Sammeln von Schmiermittel, insbesondere Öl, mit einem sich daran anschließenden raschen Druckaufbau erreichen lässt.

Zweckmäßig geht der Innenbund oberflächenfluchtend in die Rastfläche über. Der Innenbund kann aber auch bereits vor der Rastfläche enden. Der Innenbund und die Rastfläche liegen darüber hinaus vorzugsweise in einer Ebene, so dass die Keilfläche schräg zum Innenbund und schräg zur Rastfläche ausgebildet ist. Ein Übergang zwischen der Keilfläche und dem Innenbund kann dabei ausgerundet oder mittels eines Knicks ausgeführt sein.

Bei einer weiteren vorteilhaften Ausführungsform der erfindungsgemäßen Lösung weist das Axiallager / Axial-/Radiallager zumindest auf der ersten Seite drei Öltaschen, drei Rastflächen, drei Keilflächen sowie drei Dichtstege auf. Selbstverständlich kann dabei die gleiche Anzahl Öltaschen bzw. Rastflächen und Keilflächen auch auf der zweiten Seite angeordnet sein. Die Öltaschen sind dabei in Umfangsrichtung um 120° versetzt zueinander angeordnet und spiegelbildlich zu den Öltaschen auf der gegenüberliegenden Seite des Axiallagers / Axial-/Radiallagers angeordnet. Selbstverständlich können dabei auch vier oder mehr derartiger Lagerkomponenten (Öltaschen, Keilflächen und Rastflächen) vorgesehen, sowie die geometrische Anordnung variiert werden.

Bei einer weiteren vorteilhaften Ausführungsform der erfindungsgemäßen Lösung weist das Axiallager / Axial-/Radiallager eine ein oder mehrmals unterbrochene Verschleißhöhe (z.B. durch Nuten oder Ausnehmungen) auf, sodass der Verlauf der Tragkraft der Axiallagers noch besser beeinflusst werden kann. Durch die in ihrer Ausführungsform nicht näher definierten Nuten steigt die Tragkraft deutlich im Bereich der nicht komplett verschlissenen Verschleißhöhe, zudem wird durch die Nuten die Reibleistung verringert. Das Axiallager oder das kombinierte Axial-/Radiallager kann somit einen noch größeren Bereich an unterschiedlichen Tragkräften abdecken.

Die vorliegende Erfindung beruht weiter auf dem allgemeinen Gedanken, einen Abgasturbolader mit zumindest einem in den vorherigen Absätzen beschriebenen Axiallager / Axial-/Radiallager auszustatten. Hierdurch ist es möglich, mit lediglich einem einzigen Axiallagerdesign sämtliche Schubzustände, das heißt auch sämtliche Betriebszustände abzudecken, wobei der maximal auftretende Schub in der Rumpfgruppe durch das Grunddesign des Axiallagers ohne zusätzliche Verschleißhöhe abgedeckt ist, während durch die definierte zusätzliche Verschleißhöhe der minimal auftretende Schub innerhalb der Rumpfgruppe abgedeckt werden kann. Mit dem erfindungsgemäßen Axiallager / Axial-/Radiallager lässt sich somit eine optimierte Lagerung des Rotors des Abgasturboladers über die gesamte Lebensdauer erreichen, was zu einem reduzierten Kraftstoffverbrauch und damit auch zu einer Reduzierung des CO₂-Ausstoßes des Verbrennungsmotors führt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht auf ein erfindungsgemäßes Axiallager / Axial-/Radiallager in einem Abgasturbolader,
- Fig. 2: eine Schrägansicht auf das erfindungsgemäße Axiallager / Axial-/Radiallager,
- Fig. 3: eine Schnittdarstellung des Verlaufs des Keils und der Rastfläche eines Axiallagers nach dem Stand der Technik,
- Fig. 4: eine Schnittdarstellung wie in Fig. 3, jedoch bei einem erfindungsgemäßen Axiallager / Axial-/Radiallager,
- Fig. 5, 6: weitere Ausführungsformen des erfindungsgemäßen Axiallagers / Axial-/Radiallager mit durch Ausnehmungen unterbrochener Rastfläche,
- Fig. 7: eine Ansicht auf eine weitere Ausführungsform eines erfindungsgemäßen Axiallagers / Axial-/Radiallagers mit zusätzlicher im Querschnitt dreieckförmiger Verschleißschicht,
- Fig. 8: eine Schnittdarstellung entlang der Schnittebene A-A aus Fig. 7,
- Fig. 9: eine Darstellung wie in Fig. 7, jedoch mit rechteckförmiger zusätzlicher Verschleißschicht, die zudem in Radialrichtung unterbrochen ist,
- Fig. 10: eine Schnittdarstellung entlang der Schnittebene A-A aus Fig. 9,
- Fig. 11: eine Schnittdarstellung entlang der Schnittebene B-B aus Fig. 9,
- Fig. 12.: eine Schnittdarstellung entlang der Schnittebene B-B aus Fig. 9 bei einer alternativen Ausführungsform.

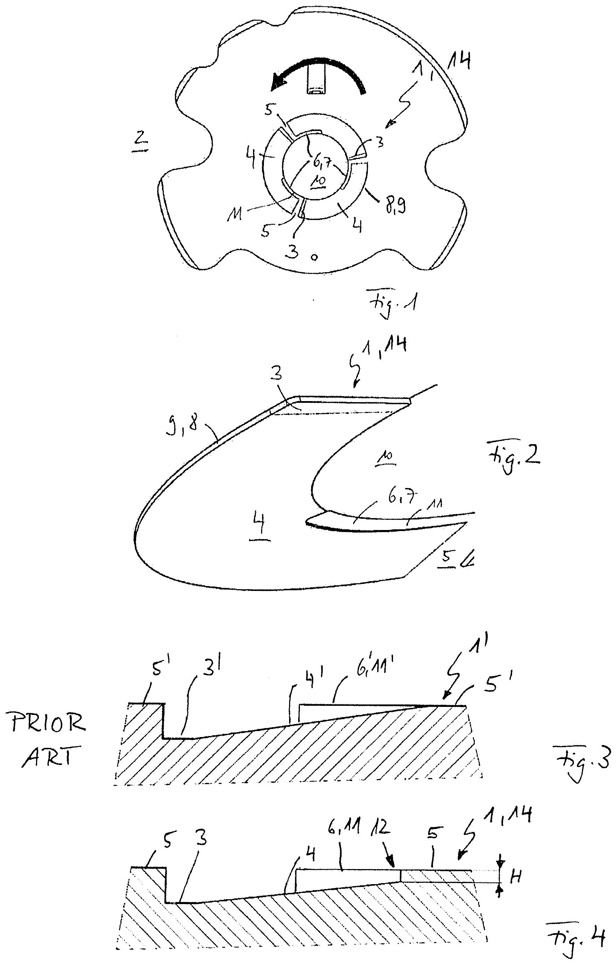

Entsprechend den Figuren 1 bis 10, weist ein erfindungsgemäßes Axiallager 1 / Axial-/Radiallager 14, insbesondere für einen Abgasturbolader 2, eine im Wesentlichen scheiben- oder zylinderförmige Gestalt mit einer ersten und einer zweiten Seite auf. Dabei besitzt dabei das Axiallager 1 / Axial-/Radiallager 14 in Umfangsrichtung nacheinander angeordnet eine kreissegmentartige Öltasche 3, eine sich daran kreissegmentartig anschließende Keilfläche 4 sowie eine sich an die Keilfläche 4 anschließende Rastfläche 5.

Erfindungsgemäß weist die Rastfläche 5 eine zusätzliche Verschleißhöhe H auf (vgl. Fig. 4), die über die Lebensdauer des Axiallagers 1 / Axial-/Radiallager 14 abgetragen werden kann. Im Folgenden wird dabei oftmals nur auf das Axiallager 1 Bezug genommen, wobei selbstverständlich klar ist, dass die zum Axiallager 1 gemachten Ausführungen in identischer Weise auch auf das erfindungsgemäße Radial-/Axiallager 14 anwendbar sind, welches insbesondere einstückig mit dem Axiallager 1 ausgebildet sein kann. Das gemäß der Fig. 3 dargestellte Axiallager 1' aus dem Stand der Technik weist diese zusätzliche Verschleißhöhe nicht auf. Prinzipiell sind dabei in der Fig. 3 die gleichen Elemente mit den gleichen Bezugszeichen, jedoch zusätzlich mit einem Apostroph bezeichnet. Des Weiteren weist das erfindungsgemäße Axiallager 1 / Axial-/Radiallager 14 einen ringsegmentförmig verlaufenden Innenbund 6 auf (vgl. die Fig. 1 und 2), der als Dichtsteg 7 ausgebildet ist. Ebenso vorgesehen ist ein zumindest ringsegmentförmig verlaufender Außenbund 8, der als Dichtsteg 9 ausgebildet ist. Bei keiner derartigen Ausführung der Dichtstege 7, 9 aufweisenden Axiallagern, würde die zusätzliche Verschleißhöhe H zu einer drastischen Reduzierung der Tragfähigkeit führen, wodurch diese in diesem Fall nicht zielführend wäre. Anders ist dies bei den erfindungsgemäßen Axiallagern 1 mit innerem und äußerem Dichtsteg 7, 9, da durch die Dichtwirkung der beiden Stege 7, 9 die Tragfähigkeit durch die vorgegebene Verschleißhöhe H kaum beeinflusst wird. Somit kann durch die vorgegebene Verschleißhöhe H die Lebensdauer deutlich gesteigert werden.

Betrachtet man das Axiallager 1 / Axial-/Radiallager 14 gemäß der Fig. 4, so kann man erkennen, dass die Keilfläche 4 über eine Stufe 12 in die Rastfläche 5 übergeht, wobei die Stufenhöhe der Verschleißhöhe H entspricht. Die Verschleißhöhe H kann dabei durch eine separate Verschleißschicht gebildet sein, insbesondere eine reib- bzw. verschleißbeständige Schicht, oder aber sie kann auch einstückig mit dem Axiallager 1 / kombinierten Axial-/Radiallager 14ausgebildet sein, wie dies gemäß der Fig. 4 dargestellt ist.

Betrachtet man nochmals das Axiallager 1 / Axial-/Radiallager 14 gemäß der Fig. 1, so kann man erkennen, dass der Innenbund 6 vorzugsweise unterbrechungsfrei in die Rastfläche 5 übergeht und dadurch ein unerwünschter Ölabfluss in Richtung einer zentralen Durchtrittsöffnung 10, durch welche die Welle geführt ist, vermieden werden kann. Auf dem Innenbund 6 ist eine Dichtfläche 11 angeordnet, die in der gleichen Ebene liegt wie die Rastfläche 5. Die Rastfläche 5 bildet dabei die eigentliche Lagerfläche.

Die Keilfläche 4 kann dabei in Umfangsrichtung eine kontinuierliche oder diskontinuierliche Steigung aufweisen und steigt von der tiefsten Stelle, d.h. von der Öltasche 3 hin zur höchsten Stelle, d.h. zur Rastfläche 5, an.

Sämtlichen gezeichneten Ausführungsformen des Axiallagers 1 / Axial-/Radiallager 14 ist dabei gemein, dass die Rastfläche 5 in Radialrichtung verläuft und der Innenbund 6 vorzugsweise oberflächenfluchtend in die Rastfläche 5 übergeht. Der in Umfangsrichtung verlaufende Innenbund 6 wiederum geht im Wesentlichen rechtwinklig in die radial verlaufende Rastfläche 5 über, wobei der als Dichtsteg 7 ausgebildete Innenbund 6 einen geringeren Druckabfall nach innen beim Druckaufbau ermöglicht, wodurch die Tragfähigkeit des Axiallagers 1 deutlich gesteigert werden kann. Die Steigung der Keilfläche 4 ist dabei nicht von vornherein festgelegt, sondern kann je nach Ausführungsform des Abgasturboladers 2 und der geforderten Lagereigenschaften individuell gewählt werden. In gleicher Weise sind auch eine Dichtfläche 11 am Innenbund 6, die Öltasche 3 bzw. die Rastfläche 5 hinsichtlich ihrer Maße beliebig variierbar und dadurch optimierbar.

Wie den gezeichneten Ausführungsformen des Axiallagers 1 / kombinierten Axial-/Radiallagers 14 zu entnehmen ist, besitzt dieses in Umfangsrichtung gleichmäßig verteilt drei Öltaschen 3, drei Rastflächen 5 sowie drei Keilflächen 4 und drei Dichtstege 7 mit gehörigem Innenbund 6. Selbstverständlich können dabei auch mehr oder weniger (bspw. eine oder zwei) Öltaschen 3, Rastflächen 5, Keilflächen 4, etc. jeweils gepaart vorgesehen werden.

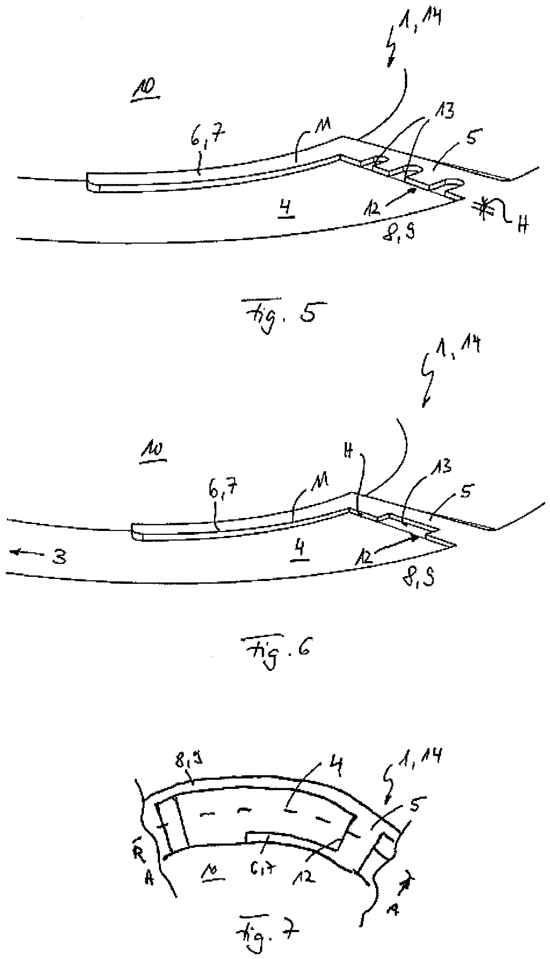

Fig. 5 und Fig. 6 zeigen weitere Ausführungsformen des erfindungsgemäßen Axiallagers 1 / Axial-/Radiallager 14 mit einer durch nicht näher definierte Ausnehmungen 13 unterbrochenen Rastfläche 5. Durch diese Ausführungsform kann die Höhe der Tragkraft sowie deren Verlauf während des Verschleißvorganges nochmals besser auf bestimmte Anforderungen angepasst werden. Dabei kann lediglich eine Ausnehmung 13 vorgesehen sein (vgl. Fig. 5), oder aber auch mehrere Ausnehmungen 13 (vgl. Fig. 6), wobei die Ausnehmung(en) 13 ausgerundet oder eckig ausgebildet sein können.

Selbstverständlich ist es auch denkbar, dass das erfindungsgemäße Axiallager 1 Bestandteil des kombinierten Radial-/Axiallagers 14 ist. Auch kann ein Abgasturbolader 2 mit einem erfindungsgemäßen Axiallager 1 und/oder einem kombinierten Radial-/Axiallager mit zumindest einem solchen Axiallager 1 ausgestattet sein.

Mit einem derartig ausgebildeten Axiallager 1 / Axial-/Radiallager 14 lässt sich insbesondere die Teilevielfalt eines Axiallagerbaukastens deutlich reduzieren, da mit dem erfindungsgemäßen Axiallager 1 / Axial-/Radiallager 14 sämtliche Schubanforderungen abgedeckt werden können. Das Grunddesign ohne Verschleißhöhe wird dabei für maximal auftretenden Schub innerhalb der Rumpfgruppe ausgelegt, wogegen durch das Vorsehen der definierten erfindungsgemäßen Verschleißhöhe H der minimal auftretende Schub der Rumpfgruppe abgedeckt werden kann. Durch einen Verschleiß definierte Verschleißhöhe H passt sich somit das erfindungsgemäße Axiallager 1 / Axial-/Radiallager 14 an die jeweiligen Schubanforderungen an. Generell kann mit der zusätzlichen Verschleißhöhe H auch die Lebensdauer des erfindungsgemäßen Axiallagers 1 erhöht werden, ebenso wie die langfristige Tragfähigkeit des Axiallagers 1 / Axial-/Radiallagers 14. Durch die verbesserte Lagerung wiederum kann eine Senkung des Kraftstoffverbrauchs und indirekt damit auch eine Senkung der CO₂-Emission erreicht werden.
Betrachtet man beispielsweise die Fig. 5 und 6, so kann man erkennen, dass zumindest die dort gezeigte Keilfläche 4 und die dort gezeigte Rastfläche 5 den Innenbund 6 und/oder den Außenbund 8 berühren, das heißt diese direkt kontaktieren. Die Rastfläche 5 geht zudem unterbrechungsfrei und fluchtend in den Innenbund 6 und den Außenbund 8 und damit in die beiden Dichtstege 7,9 über.

Insbesondere gibt es keinen Spalt zwischen der Rastfläche 5 bzw. der Keilfläche 4 und dem Innenbund 6 und/oder dem Außenbund 8. Die beiden Dichtstege 7,9, das heißt die beiden Bünde 6,8 erfüllen somit nicht nur eine Dichtfunktion, sondern beeinflussen auch den Druckaufbau im Bereich der Keilfläche 4.

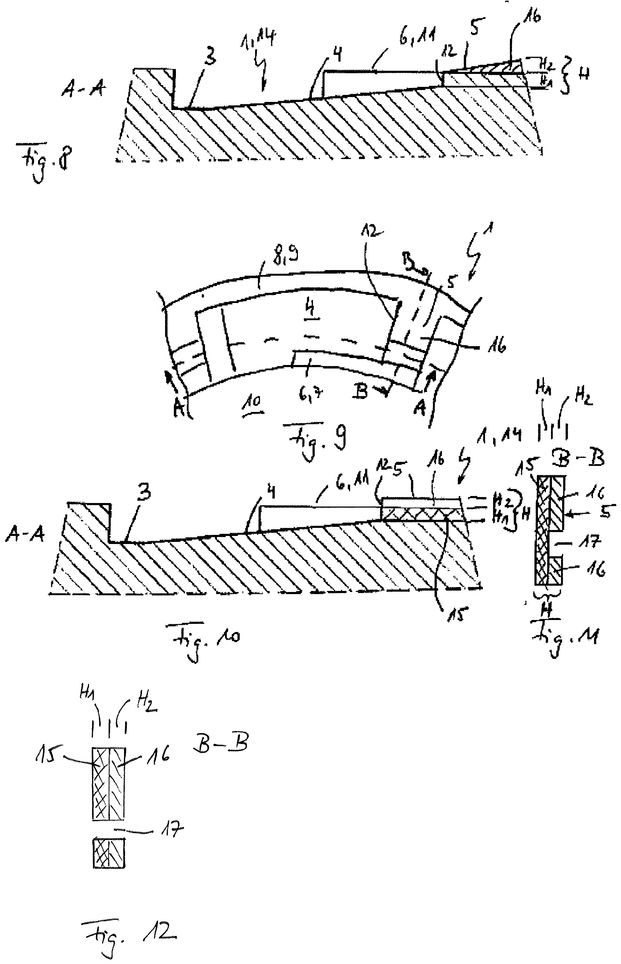

In den Fig. 7 und 8 ist eine Ausführungsform des Axiallagers 1 oder des Axial-/Radiallagers 14 gezeigt, bei welcher die Teilverschleißhöhe H₁ einstückig mit dem Axiallager 1 oder dem Axial-/Radiallager 14 ausgebildet ist und zusätzlich zumindest eine separate Verschleißschicht 16 mit einer Teilverschleißhöhe H₂ vorgesehen ist. Die gesamte zur Verfügung stehende Verschleißhöhe H ergibt sich dabei aus einer Summe der Teilverschleißhöhen H₁ und H₂. Selbstverständlich ist auch denkbar, dass auch die Teilverschleißhöhe H₁ durch eine separate Verschleißschicht 15 gebildet ist, wie dies beispielsweise in Fig. 10 dargestellt ist.

In Fig. 8 ist die einstückig mit dem Axiallager 1 oder dem Axial-/Radiallager 14 ausgebildete Teilverschleißhöhe H₁ im Querschnitt rechteckig, wogegen die zumindest eine separate Verschleißschicht 16 im Querschnitt dreieckförmig ausgebildet ist, wobei in letzterem Fall die Teilverschleißhöhe H₂ der Höhe der dreieckförmigen Verschleißschicht 16 entspricht. In Fig. 10 ist die Verschleißhöhe H durch eine erste separate Verschleißschicht 15 mit der Teilverschleißhöhe H₁ und eine zweite separate Verschleißschicht 16 mit der Teilverschleißhöhe H₂ gebildet. Beide Verschleißschichten 15, 16 sind dabei im Querschnitt rechteckförmig.

Die separate Verschleißschicht 16 aus den Fig. 9 bis 11 ist in Radialrichtung unterbrochen, das heißt sie weist eine Aussparung 17 auf. Die bedeutet, dass die Verschleißhöhe H und die Teilverschleißhöhe H₂ in Radialrichtung variieren. Dabei ist klar, dass die Verschleißschichten 15 oder 16 auch mehrere Aussparungen 17 aufweisen können, das heißt mehrfach unterbrochen sind. Auch ist eine Kombination einer zumindest einmal unterbrochenen dreieckförmigen Verschleißschicht 16 mit einer rechteckförmigen Verschleißschicht 15 denkbar. Durch die Aussparung 17 kann eine definierte Reduzierung der Tragfähigkeitsverlust des Axiallagers 1 bzw. das Axial-/Radiallagers 14 bewirkt werden.

Betrachtet man die Fig. 12, so kann man erkennen, dass beide Verschleißschichten 15, 16 vollständig von der Aussparung 17 unterbrochen sind. In diesem Fall würde die Keilfläche 4 direkt in die Aussparung 17 übergehen. Auch eine lediglich teilweise über die Höhe H₁ verlaufende Aussparung 17 ist denkbar. In diesem Fall ginge die Aussparung 17 über einen Teil der Verschleißschicht 15 mit der Höhe H₁ und über die ganze Verschleißschicht 16 mit der Höhe H₂.

Mit der Verschleißschicht 15 kann die Lebensdauer gesteigert und ein wirksamer Schutz gegen Überlastung geschaffen werden. Hierdurch kann das Axiallager 1 bzw. das Axial-/Radiallager 14 hinsichtlich seiner Dimensionen optimiert werden. Je nach Auswahl des Materials für die Verschleißschicht 15 muss kein Tragfähigkeitsverlust befürchtet werden.

Durch die dreieckförmige Verschleißschicht 16 aus Fig. 8 kann eine sich selbst einschleifende Variante geschaffen werden. Hierdurch ist beispielsweise eine Verschlankung eines Baukastens, aus welchem das Axiallager 1 bzw. das Axial-/Radiallager 14 zusammengesetzt wird möglich.

## Patentansprüche

1. Axiallager (1) oder kombiniertes Axial-/Radiallager (14), insbesondere für einen Abgasturbolader (2), das im Wesentlichen eine scheiben- oder zylinderförmige Gestalt und eine zentrisch angeordnete Durchtrittsöffnung (10) für eine Welle aufweist, mit einer an einer Seite in Umfangsrichtung nacheinander angeordneten
- kreissegmentartigen Öltasche (3),
- einer sich daran kreissegmentartig anschließenden Keilfläche (4),
- und einer sich an die Keilfläche (4) anschließenden Rastfläche (5),
- wobei die Rastfläche (5) eine zusätzliche Verschleißhöhe (H) aufweist, die über die Lebensdauer des Axiallagers (1) abgetragen werden kann,
- wobei ein ringsegmentförmig verlaufender Innenbund (6) vorgesehen ist, der als Dichtsteg (7) ausgebildet ist,
- wobei ein zumindest ringsegmentförmig verlaufender Außenbund (8) vorgesehen ist, der als Dichtsteg (9) ausgebildet ist,
**dadurch gekennzeichnet,**
**dass** die Keilfläche (4) über eine Stufe (12) in die Rastfläche (5) übergeht, wobei die Stufenhöhe der Verschleißhöhe (H) entspricht.

2. Axiallager oder Axial-/Radiallager nach einem der Ansprüche 1,
**dadurch gekennzeichnet,**
- **dass** die Verschleißhöhe (H) durch zumindest eine separate Verschleißschicht (15, 16) gebildet ist, oder
- **dass** die Verschleißhöhe (H) einstückig mit dem Axiallager (1) oder dem Axial-/Radiallager (14) ausgebildet ist.

3. Axiallager oder Axial-/Radiallager Anspruch 2, erste Alternative,
**dadurch gekennzeichnet,**
**dass** die zumindest eine separate Verschleißschicht (15, 16) im Querschnitt rechteckförmig oder dreieckförmig ausgebildet ist.

4. Axiallager oder Axial-/Radiallager nach Anspruch 3,
**dadurch gekennzeichnet,**
**dass** die Verschleißschicht (15, 16) in Radialrichtung unterbrochen ist.

5. Axiallager oder Axial-/Radiallager nach einem der Ansprüche 1 bis 4,
**dadurch gekennzeichnet,**
**dass** die Verschleißhöhe (H) in Radialrichtung variiert.

6. Axiallager oder Axial-/Radiallager nach einem der Ansprüche 1 bis 5,
**dadurch gekennzeichnet,**
**dass** der Innenbund (6) vorzugsweise unterbrechungsfrei in die Rastfläche (5) übergeht.

7. Axiallager oder Axial-/Radiallager nach einem der Ansprüche 1 bis 6,
**dadurch gekennzeichnet,**
**dass** die Keilfläche (4) eine in Umfangsrichtung kontinuierliche oder diskontinuierliche Steigung aufweist.

8. Axiallager oder Axial-/Radiallager nach einem der Ansprüche 1 bis 7,
**dadurch gekennzeichnet,**
**dass** die Rastfläche (5) in Radialrichtung verläuft.

9. Axiallager oder Axial-/Radiallager nach einem der Ansprüche 1 bis 8,
**dadurch gekennzeichnet,**
**dass** der Innenbund (6) oberflächenfluchtend in die Rastfläche (5) übergeht.

10. Axiallager oder Axial-/Radiallager nach einem der Ansprüche 1 bis 9,
**dadurch gekennzeichnet,**
**dass** der Innenbund (6) ebenfalls eine zusätzliche Verschleißhöhe (H) aufweist, die über die Lebensdauer des Axiallagers (1) oder des Axial-/Radiallagers (14) abgetragen wird.

11. Axiallager oder Axial-/Radiallager nach einem der Ansprüche 1 bis 10, **dadurch gekennzeichnet, dass** die Verschleißhöhe (H) der Rastfläche (5) durch eine oder mehrere nicht näher definierte Nuten (13) unterbrochen sein kann.

12. Axiallager oder Axial-/Radiallager nach einem der Ansprüche 1 bis 11,
**dadurch gekennzeichnet,**
**dass** das Axiallager (1) / Axial-/Radiallager (14) auf zumindest einer Seite drei Öltaschen (3), drei Rastflächen (5), drei Keilflächen (4) und drei Dichtstege (7) aufweist.

13. Axiallager oder Axial-/Radiallager nach einem der Ansprüche 1 bis 12,
**dadurch gekennzeichnet,**
**dass** zumindest eine Keilfläche (4) und/oder zumindest eine Rastfläche (5) den Innenbund (6) und/oder den Außenbund (8) berührt, das heißt diese(n) kontaktiert.

14. Axiallager oder Axial-/Radiallager nach einem der Ansprüche 1 bis 13,
**dadurch gekennzeichnet,**
**dass** zumindest eine Rastfläche (5) unterbrechungsfrei und fluchtend in den Innenbund (6) und/oder den Außenbund (8) übergeht.

15. Abgasturbolader (2) mit wenigstens einem Axiallager (1) oder einem kombinierten Axial-/Radiallager (14) mit den Merkmalen gemäß einem der Ansprüche 1 bis 14.

## Claims

1. An axial bearing (1) or combined axial/radial bearing (14), in particular for an exhaust gas turbocharger (2), which has substantially a disc-shaped or cylindrical shape and has a centrally arranged passage opening (10) for a shaft, with
- an on one side in the circumferential direction successively arranged oil pocket (3) in the manner of a segment of a circle,
- a wedge surface (4) adjoining thereto in the manner of a segment of a circle, and
- a detent surface (5) adjoining the wedge surface (4),
- wherein the detent surface (5) has an additional wear height (H), which can be worn down over the lifespan of the axial bearing (1),
- wherein an inner flange (6), running in the form of a ring segment, is provided, which is constructed as a sealing web (7),
- wherein an outer flange (8), running at least in the form of ring segment, is provided, which is constructed as a sealing web (9)
**characterized in that**
the wedge surface (4) continues via a step (12) into the detent surface (5), wherein the step height corresponds to the wear height (H).

2. The axial bearing or axial/radial bearing according to Claim 1,
**characterized in that**
- the wear height (H) is formed by at least one separate wear layer (15, 16), or
- the wear height (H) is constructed in one piece with the axial bearing (1) or with the axial/radial bearing (14).

3. The axial bearing or axial/radial bearing Claim 2, first alternative,
**characterized in that**
the at least one separate wear layer (15, 16) is constructed so as to be rectangular or triangular in cross-section.

4. The axial bearing or axial/radial bearing according to Claim 3,
**characterized in that**
the wear layer (15, 16) is interrupted in radial direction.

5. The axial bearing or axial/radial bearing according to one of Claims 1 to 4,
**characterized in that**
the wear height (H) varies in radial direction.

6. The axial bearing or axial/radial bearing according to one of Claims 1 to 5,
**characterized in that**
the inner flange (6) preferably continues uninterruptedly into the detent surface (5).

7. The axial bearing or axial/radial bearing according to one of Claims 1 to 6,
**characterized in that**
the wedge surface (4) has an incline which is continuous or discontinuous in circumferential direction.

8. The axial bearing or axial/radial bearing according to one of Claims 1 to 7,
**characterized in that**
the detent surface (5) runs in radial direction.

9. The axial bearing or axial/radial bearing according to one of Claims 1 to 8,
**characterized in that**
the inner flange (6) continues flush with the surface into the detent surface (5).

10. The axial bearing or axial/radial bearing according to one of Claims 1 to 9,
**characterized in that**
the inner flange (6) also has an additional wear height (H), which is worn down over the lifespan of the axial bearing (1) or of the axial/radial bearing (14).

11. The axial bearing or axial/radial bearing according to one of Claims 1 to 10, **characterized in that** the wear height (H) of the detent surface (5) can be interrupted by one or more grooves (13) which are not defined in further detail.

12. The axial bearing or axial/radial bearing according to one of Claims 1 to 11,
**characterized in that**
the axial bearing (1) / axial/radial bearing (14) has on at least one side three oil pockets (3), three detent surfaces (5), three wedge surfaces (4) and three sealing webs (7).

13. The axial bearing or axial/radial bearing according to one of Claims 1 to 12,
**characterized in that**
at least one wedge surface (4) and/or at least one detent surface (5) touches the inner flange (6) and/or the outer flange (8), i.e. contacts this/these.

14. The axial bearing or axial/radial bearing according to one of Claims 1 to 13,
**characterized in that**
at least one detent surface (5) continues uninterruptedly and flush into the inner flange (6) and/or into the outer flange (8).

15. An exhaust gas turbocharger (2) with at least one axial bearing (1) or a combined axial/radial bearing (14) having the features according to one of Claims 1 to 14.

## Revendications

1. Palier axial (1) ou palier axial/radial combiné (14), en particulier pour un turbocompresseur à gaz d'échappement (2), qui présente sensiblement une forme de disque ou cylindre et une ouverture de passage (10) agencée de manière centrale pour un arbre,
avec une
- poche à huile (3) de type segment circulaire, agencée sur un côté dans le sens périphérique l'une après l'autre,
- une surface cunéiforme de type segment circulaire contiguë à celle-ci (4),
- et une surface d'encliquetage (5) contiguë à la surface cunéiforme (4),
- dans lequel la surface d'encliquetage (5) présente une hauteur d'usure (H) supplémentaire qui peut être éliminée sur la durée de vie du palier axial (1),
- dans lequel un collet intérieur (6) s'étendant en forme de segment annulaire est prévu, lequel est réalisé comme nervure d'étanchéité (7),
- dans lequel un collet extérieur (8) s'étendant au moins en forme de segment annulaire est prévu, lequel est réalisé comme nervure d'étanchéité (9),
**caractérisé en ce que**
la surface cunéiforme (4) passe par un gradin (12) en la surface d'encliquetage (5), dans lequel la hauteur du gradin correspond à la hauteur d'usure (H).

2. Palier axial ou palier axial/radial selon l'une quelconque des revendications 1, **caractérisé en ce que**
- la hauteur d'usure (H) est formée par au moins une couche d'usure (15, 16) séparée, ou
- la hauteur d'usure (H) est réalisée d'un seul tenant avec le palier axial (1) ou le palier axial/radial (14).

3. Palier axial ou palier axial/radial selon la revendication 2, première alternative,
**caractérisé en ce que**
l'au moins une couche d'usure séparée (15, 16) est réalisée en section transversale en forme de rectangle ou triangle.

4. Palier axial ou palier axial/radial selon la revendication 3,
**caractérisé en ce que**
la couche d'usure (15, 16) est interrompue dans le sens radial.

5. Palier axial ou palier axial/radial selon l'une quelconque des revendications 1 à 4,
**caractérisé en ce que**
la hauteur d'usure (H) varie dans le sens radial.

6. Palier axial ou palier axial/radial selon l'une quelconque des revendications 1 à 5,
**caractérisé en ce que**
le collet intérieur (6) passe de préférence sans interruption en la surface d'encliquetage (5).

7. Palier axial ou palier axial/radial selon l'une quelconque des revendications 1 à 6,
**caractérisé en ce que**
la surface cunéiforme (4) présente une pente continue ou discontinue dans le sens périphérique.

8. Palier axial ou palier axial/radial selon l'une quelconque des revendications 1 à 7,
**caractérisé en ce que**
la surface d'encliquetage (5) s'étend dans le sens radial.

9. Palier axial ou palier axial/radial selon l'une quelconque des revendications 1 à 8,
**caractérisé en ce que**
le collet intérieur (6) passe par alignement de surface en la surface d'encliquetage (5).

10. Palier axial ou palier axial/radial selon l'une quelconque des revendications 1 à 9,
**caractérisé en ce que**
le collet intérieur (6) présente aussi une hauteur d'usure (H) supplémentaire qui est éliminée sur la durée de vie du palier axial (1) ou du palier axial/radial (14).

11. Palier axial ou palier axial/radial selon l'une quelconque des revendications 1 à 10,
**caractérisé en ce que** la hauteur d'usure (H) de la surface d'encliquetage (5) peut être interrompue par une ou plusieurs rainures (13) non définies plus en détail.

12. Palier axial ou palier axial/radial selon l'une quelconque des revendications 1 à 11,
**caractérisé en ce que**
le palier axial (1) / palier axial/radial (14) présente sur au moins un côté trois poches à huile (3), trois surfaces d'encliquetage (5), trois surfaces cunéiformes (4) et trois nervures d'étanchéité (7).

13. Palier axial ou palier axial/radial selon l'une quelconque des revendications 1 à 12,
**caractérisé en ce que**
au moins une surface cunéiforme (4) et/ou au moins une surface d'encliquetage (5) touche le collet intérieur (6) et/ou le collet extérieur (8), c'est-à-dire touche celui-ci/ceux-ci.

14. Palier axial ou palier axial/radial selon l'une quelconque des revendications 1 à 13,
**caractérisé en ce que**
au moins une surface d'encliquetage (5) passe sans interruption et par alignement en le collet intérieur (6) et/ou le collet extérieur (8).

15. Turbocompresseur à gaz d'échappement (2) avec au moins un palier axial (1) ou un palier axial/radial combiné (14) présentant les caractéristiques selon l'une quelconque des revendications 1 à 14.
